# EUROPÄISCHE PATENTSCHRIFT

(11) **EP 3 259 328 B1**
(45) Veröffentlichungstag und Bekanntmachung des Hinweises auf die Patenterteilung: **26.12.2018**
(21) Anmeldenummer: 16702487.6
(22) Anmeldetag: 19.01.2016
(51) Int. Cl.: C09K 3/24, C08L 71/02, C08J 3/12

(54) **DEKORATIONSMATERIAL, INSBESONDERE KUNSTSCHNEE UND VERFAHREN ZU SEINER HERSTELLUNG**
DECORATIVE MATERIAL, PARTICULARLY ARTIFICIAL SNOW, AND A METHOD FOR PRODUCING SAME
MATÉRIAU DE DÉCORATION, EN PARTICULIER NEIGE ARTIFICIELLE, ET PROCÉDÉ POUR LE PRODUIRE

(30) Priorität: 16.02.2015 DE 102015001915
(43) Veröffentlichungstag der Anmeldung: 27.12.2017
(73) Patentinhaber: Clariant International Ltd, 4132 Muttenz (CH)
(72) Erfinder: VYBIRAL, Reinhard, 84508 Burgkirchen (DE); PETERSHOFER, Christian, 84508 Burgkirchen (DE)
(74) Vertreter: Mikulecky, Klaus
(86) Internationale Anmeldenummer: PCT/EP2016/050938
(87) Internationale Veröffentlichungsnummer: WO 2016/131586

(56) Entgegenhaltungen:
- DE-A1-102007 052 870
- US-A1- 2011 065 841
- P Kappler ET AL: "SIZE AND MORPHOLOGY OF PARTICLES GENERATED BY SPRAYING POLYMER-MELTS WITH CARBON DIOXIDE", Proc 6th Int Symp on Supercrit Fluids, Versailles, 28-30 April 2003. p. 1891-96, 30. April 2003 (2003-04-30), XP055264600, Gefunden im Internet: URL:http://www.isasf.net/fileadmin/files/D ocs/Versailles/Papers/PMd34.pdf [gefunden am 2016-04-12]

## Beschreibung

Die Erfindung betrifft die Verwendung von Polyethylenglykol zur Herstellung von Dekorationsmaterial, insbesondere Kunstschnee.
Dekorationsmaterial, insbesondere Kunstschnee hat verschiedene Verwendungsbereiche, unter denen die Erhöhung der Attraktivität von z. B. Schaufenstern, Ausstellungsräumen, Messeständen, Restaurantauslagen, Werbefotografie und -film und dergleichen zu nennen wären. Kunstschnee kann für die saisonale Dekoration von Häusern und Geschäften sowie als Ersatz für echten Schnee in Theaterproduktionen, Filmsets, und dergleichen verwendet werden.
Vorzugsweise ähnelt Kunstschnee dem Naturschnee in Textur und Farbe, dies ist jedoch schwer zu erreichen.
US-2005/0126693 lehrt ein Kunstschnee-Dekorationsprodukt und ein Verfahren zu seiner Herstellung. Das Kunstschneeprodukt umfasst einen weiß pigmentierten Silikongummi, der in Form von Schneefeldern geformt ist.
US-2011/0065841 lehrt ein Verfahren zur Herstellung von Kunstschnee, indem eine Mischung aus Stärke, Polyvinylalkohol, hydrierten Sojaflocken und Talkum extrudiert und als Flocken verteilt wird.
P. Kappler et al.: "Size and morphology of particles generated by spraying polymer-melts with carbon dioxide" Proc. 6th Int. Symp. on Supercrit Fluids, Versailles, 38-30 April 2003. p. 1891-96, 30. April 2003 (2003-04-30), lehrt Polyethylenglykol-Teilchen mit Partikelgröße von ca. 20 bis ca. 100 Mikrometer.

Das PEG-Pulver wird durch Sprühen von Polyethylenglykolschmelzen in einer PGSS-Anlage hergestellt, wobei das flüssige PEG in einem Sprühturm zu Sprühpulver erstarrt wird. Es offenbart außerdem, dass das PEG ein zahlenmittleres Molekulargewicht von 6000 g/mol und Schüttdichten bis 0,9 g/cm³ umfasst und dass der Schmelzpunkt des PEGs bei 60 °C liegt.

DE-A-10 2007 052870 lehrt die Verwendung von Polyethylenglykol-Pulvern mit einem mittleren Molekulargewicht (Zahlenmittel) von 1500 bis 20000 g/mol, welche
- eine Teilchengröße von 100 - 1000 µm aufweisen, wobei mindestens 90 % der Teilchen eine Größe innerhalb einer Verteilung von ± 100 µm aufweisen und worin
- die Teilchen Kugelform haben,
in oder als kosmetische und/oder pharmazeutische Produkte.

Kunstschnee oder Dekorationsmaterial wird oft an Orten eingesetzt, die der Öffentlichkeit zugänglich sind, und sollte daher keine gesundheitliche Gefahr darstellen. Das Dekorationsmaterial soll darüber hinaus unbrennbar sein.

Gegenstand der Erfindung ist die Verwendung von Polyethylenglykol mit einem zahlenmittleren Molekulargewicht im Bereich von 1.500 bis 35.000 g/mol in Form von festen, schuppenförmigen oder pulverförmigen Partikeln mit einer Schüttdichte von 0,3 bis 1,1 g/cm³ und einer Partikelgröße von 1 µm bis 20 mm als Dekorationsmaterial, insbesondere Kunstschnee.
Schuppenartige Partikel weisen als bevorzugte Ausführungsform der Erfindung eine Partikelgröße von 0,1 bis 20 mm, vorzugsweise von 0,4 bis 10 mm auf. Pulverförmige Partikel weisen als bevorzugte Ausführungsform der Erfindung eine Partikelgröße von 1 bis 1000 µm, vorzugsweise von 5 bis 700 µm auf.
In einer bevorzugten Ausführungsform liegt die Schüttdichte des Dekorationsmaterials zwischen 0,3 und 0,8, insbesondere zwischen 0,4 und 0,7 g/cm³.
Für die Ausführung als Pulver kann die Schmelze in einer Kühlsprühanlage zu Sprühpulver verarbeitet werden. Sprühpulver enthalten vorzugsweise bis zu 15 Gew.-% von Pulverpartikeln mit einer Größe von < 90 µm, 20 bis 45 Gew.-% von Pulverpartikeln mit einer Größe von 90 bis 200 µm und 35 bis 70 Gew.-% von Pulverpartikeln mit einer Größe von > 200 µm. Solche Sprühpulver weisen vorzugsweise eine Schüttdichte von 0,43 bis 0,72 g/cm³ auf.

Es ist jedoch auch möglich, Mahlpulver durch einen Mahlprozess in einer Mühlanlage herzustellen. Mahlpulver enthalten in einer Ausführungsform vorzugsweise 1 bis 30 Gew.-% von Pulverpartikeln mit einer Größe von < 90 µm, 10 bis 30 Gew.-% von Pulverpartikeln mit einer Größe von 90 bis 200 µm und 50 bis 75 Gew.-% von Pulverpartikeln mit einer Größe von > 200 µm. Solche Mahlpulver weisen vorzugsweise eine Schüttdichte von 0,5 bis 0,7 g/cm³ auf. Feine Mahlpulver enthalten in einer Ausführungsform vorzugsweise 75 bis 95 Gew.-% von Pulverpartikeln mit einer Größe von < 90 µm, 5 bis 25 Gew.-% von Pulverpartikeln mit einer Größe von 90 bis 200 µm und 0 bis 5 Gew.-% von Pulverpartikeln mit einer Größe von > 200 µm. Solche feinen Mahlpulver weisen vorzugsweise eine Schüttdichte von 0,45 bis 0,55 g/cm³ auf.
Die Messung der Partikelgröße erfolgt durch geeignete Partikelanalysatoren. Die Wahl des geeigneten Partikelanalysators hängt von der zu messenden Partikelgröße ab. Partikelgrößen im Bereich von 1 µm bis 1 mm werden vorzugsweise mittels Lichtstreuung bestimmt. Ein geeigneter Partikelanalysator, der Lichtstreuung nutzt, ist das Gerät Crystalsizer der Fa. Retsch. Partikelgrößen im Bereich von 1 bis 20 mm werden vorzugsweise mechanisch durch Siebanalyse bestimmt.
In einer bevorzugten Ausführungsform liegt die Schüttdichte des Dekorationsmaterials zwischen 0,3 und 0,8, insbesondere zwischen 0,4 und 0,7 g/cm³.

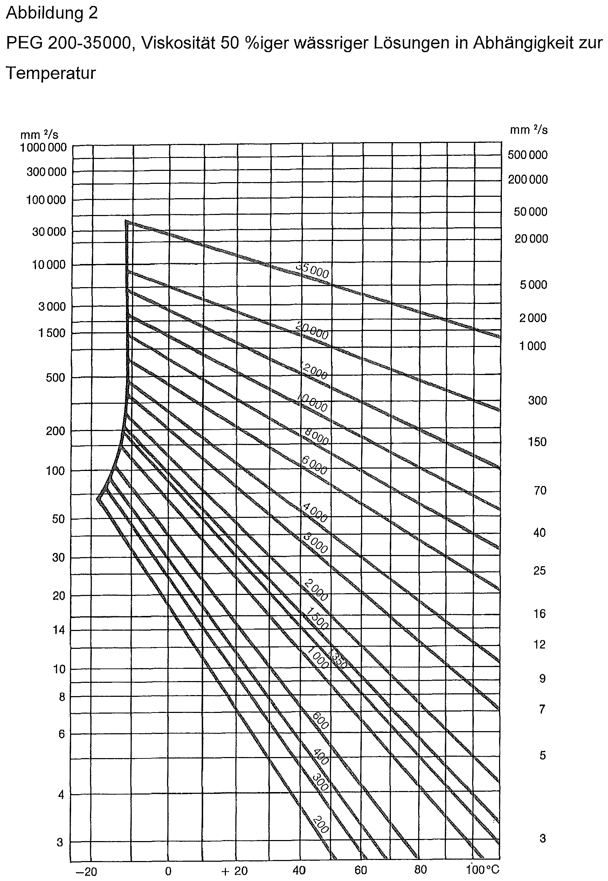

In einer bevorzugten Ausführungsform umfasst der Kunstschnee, ein Polyethylenglykol mit einem zahlenmittleren Molekulargewicht von 2.000 bis 30.000, insbesondere 4.000 bis 25.000 g/mol.
Die Bestimmung des Molekulargewichtes erfolgt mittels Bestimmung der Viskosität einer 50 %igen wässrigen Lösung des Polyethylenglykols bei 20 °C durch eine Rotationsviskosimeter-Messung (ISO 6388). Die Korrelation des zahlenmittleren Molekulargewichts zur gemessenen Viskosität ist Abbildung 2 zu entnehmen.
Der Schmelzpunkt der verwendeten Polyethylenglykole liegt vorzugsweise bei 35 bis 65 °C, insbesondere bei 40 bis 60°C.

Es können dem Polyethylenglykol Stabilisatoren wie BHA (Butylhydroxyanisol) oder BHT (Butylhydroxytoluol), jeweils in Lebensmittelqualität, zugesetzt werden. Das an sich schon sehr lagerstabile Polyethylenglykol kann durch die Zugabe dieser Stabilisatoren noch lagerfähiger gemacht werden. Der Mengenanteil an zugesetztem Stabilisator kann dabei 0.01 Gew.-% bis 0.10 Gew.-% bezogen auf das Gewicht des Dekorationsmaterials betragen.
In einer weiteren Ausführungsform ist es möglich das Polyethylenglykol mit verschiedenen Farbstoffen oder Geruchsstoffen zu versetzen und somit beispielsweise das Anwendungsgebiet der Dekoration mit dem weiteren Anwendungsgebiet einer Beduftung von z.B. Geschäftsräumen, Ausstellungsräumen oder auch Privaträumen zu verbinden.
Durch Zusatz von geeigneten Farbstoffen in einer Konzentration von 0,01 - 2 Gew.-% bezogen auf das Gewicht des Dekorationsmaterials, insbesondere Kunstschnees, können zusätzliche, farbige Effekte erzielt werden.

Das Dekorationsmaterial, insbesondere Kunstschnee, ist umweltfreundlich und ungiftig, und überwindet Probleme anderer Kunstschnee/ Dekorationsmaterial-Produkte, die gesundheitsschädliche, giftige oder umweltgefährdende Materialien enthalten.

Die Herstellung des Dekorationsmaterials, insbesondere Kunstschnees, kann wie folgt durchgeführt werden.
Ausgehend von einem geeigneten Rohstoff, vorzugsweise ein Polyalkylenglykol mit bis zu 6 Kohlenstoffatomen, insbesondere Monoethylenglykol oder Diethylenglykol, wird in geeigneten Ethoxylierungsreaktoren über die Reaktion mit Ethylenoxid ein Polyethylenglykol mit Molmasse 1.500 bis 35.000 g/mol hergestellt. Dieses Polyethylenglykol wird als Schmelze einer Anlage zur Herstellung von schuppenartigen Partikeln zugeführt. In dieser Anlage wird die Schmelze auf gekühlten Bändern oder Walzen soweit abgekühlt, daß das Polyethylenglykol fest wird. Um die Partikelgröße von 1 µm bis 20 mm zu erhalten wird das Produkt anschließend einem Zerkleinerungsapparat zugeführt. Nach dem Zerkleinern wird das Produkt in geeignete Behältnisse abgefüllt.
Der dadurch erzeugte Kunstschnee bzw. das generelle Dekorationsmaterial besitzt bedingt durch das Herstellverfahren eine charakteristische und sehr attraktive optische Wirkung. Die schuppenartigen Partikel funkeln im Licht und das reinweiße oder gegebenenfalls gefärbte Erscheinungsbild kann für die gewünschten Effekte herangezogen werden.

Der Kunstschnee ist dafür geeignet, für saisonale Dekoration von Häusern und Geschäften sowie als Ersatz für echten Schnee in Theaterproduktionen, Filmsets, und dergleichen verwendet zu werden. Der Kunstschnee kann auch in der Produktion von Werbung und anderem kommerziellen Kunstwerk verwendet werden. Das generelle Dekorationsmaterial ist dafür geeignet, für die Erhöhung der Attraktivität von z.B. Schaufenstern, Ausstellungsräumen, Messeständen, Restaurantauslagen, Werbefotografie und -film und dergleichen verwendet zu werden.

### Beispiel

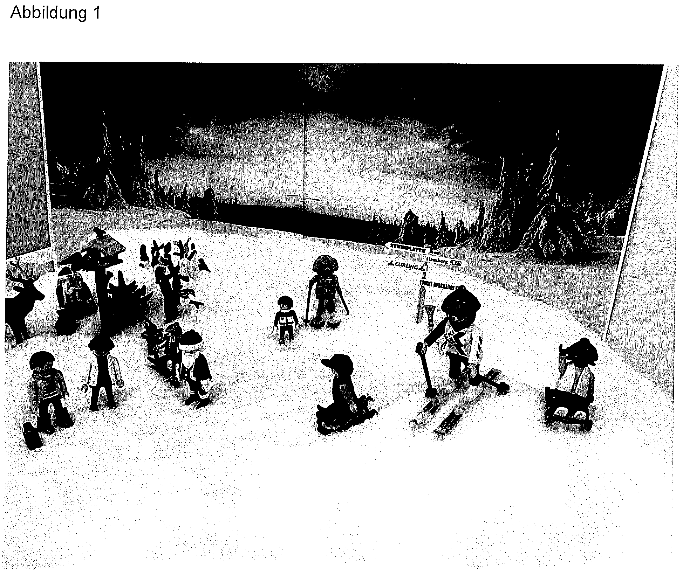

PEG Schuppen mit zahlenmittlerem Molekulargewicht 12.000 g/mol, ermittelt aus einer Viskosität der 50 %igen wässrigen Lösung von ca. 1300 mPas bei 20 °C (gemessen per Rotationsviskosimeter, ISO 6388), einem Schmelzpunkt von ca. 56 °C und einer Partikelgröße von 0.2 mm bis 10 mm wurden mit weiterem Dekorationsmaterial zu einer Winterlandschaft arrangiert. Es ergibt sich der Eindruck von Schnee, wie in Abbildung 1 zu erkennen ist.

## Patentansprüche

1. Verwendung von Polyethylenglykol mit einem zahlenmittleren Molekulargewicht im Bereich von 1.500 bis 35.000 g/mol in Form von festen, schuppenförmigen oder pulverförmigen Partikeln mit einer Schüttdichte von 0,3 bis 1,1 g/cm³ und einer Partikelgröße von 1 µm bis 20 mm als Dekorationsmaterial, insbesondere als Kunstschnee.

2. Verwendung nach Anspruch 1, worin das zahlenmittlere Molekulargewicht des Polyethylenglykols zwischen 2.000 und 30.000 g/mol liegt.

3. Verwendung nach Anspruch 1, worin das zahlenmittlere Molekulargewicht des Polyethylenglykols zwischen 4.000 und 25.000 g/mol liegt.

4. Verwendung nach einem oder mehreren der Ansprüche 1 bis 3, worin der Schmelzpunkt des Polyethylenglykols bei 35 bis 65 °C liegt.

5. Verwendung nach einem oder mehreren der Ansprüche 1 bis 3, worin der Schmelzpunkt des Polyethylenglykols bei 40 bis 60 °C liegt.

6. Verwendung nach einem oder mehreren der Ansprüche 1 bis 5, worin zusätzlich Butylhydroxyanisol oder Butylhydroxytoluol zugesetzt werden.

7. Verwendung nach einem oder mehreren der Ansprüche 1 bis 6, worin zusätzlich ein oder mehrere Farbstoffe in einer Konzentration von 0,01 - 2 Gew.-% bezogen auf das Gewicht des Dekorationsmaterials enthalten sind.

8. Verwendung nach einem oder mehreren der Ansprüche 1 bis 7, worin zusätzlich ein oder mehrere Geruchsstoffe in einer wirksamen Konzentration enthalten sind.

9. Verwendung nach einem oder mehreren der Ansprüche 1 bis 8, welches in Form von Schuppen vorliegt, die eine Partikelgröße von 0,1 bis 20 mm aufweisen.

10. Verwendung nach einem oder mehreren der Ansprüche 1 bis 8, welches als Pulver mit einer Partikelgröße von 1 bis 1000 µm vorliegt.

## Claims

1. The use of polyethylene glycol having a number-average molecular weight in the range from 1500 to 35 000 g/mol in the form of particles that are in solid form or in the form of flakes or powder and have a bulk density of 0.3 to 1.1 g/cm³ and a particle size of 1 *µ*m to 20 mm as decorative material, especially as artificial snow.

2. The use as claimed in claim 1, in which the number-average molecular weight of the polyethylene glycol is between 2000 and 30 000 g/mol.

3. The use as claimed in claim 1, in which the number-average molecular weight of the polyethylene glycol is between 4000 and 25 000 g/mol.

4. The use as claimed in one or more of claims 1 to 3, in which the melting point of the polyethylene glycol is 35 to 65°C.

5. The use as claimed in one or more of claims 1 to 3, in which the melting point of the polyethylene glycol is 40 to 60°C.

6. The use as claimed in one or more of claims 1 to 5, in which butylhydroxyanisole or butylhydroxytoluene are additionally added.

7. The use as claimed in one or more of claims 1 to 6, in which one or more dyes in a concentration of 0.01%-2% by weight, based on the weight of the decorative material, are additionally present.

8. The use as claimed in one or more of claims 1 to 7, in which one or more odorants are additionally present in an effective concentration.

9. The use as claimed in one or more of claims 1 to 8, in the form of flakes having a particle size of 0.1 to 20 mm.

10. The use as claimed in one or more of claims 1 to 8, in the form of powder having a particle size of 1 to 1000 *µ*m.

## Revendications

1. Utilisation de polyéthylène glycol ayant un poids moléculaire moyen en nombre dans la plage allant de 1 500 à 35 000 g/mol sous la forme de particules solides, de paillettes ou de poudre ayant une densité apparente de 0,3 à 1,1 g/cm³ et une taille de particule de 1 *µ*m à 20 mm en tant que matériau décoratif, notamment en tant que neige artificielle.

2. Utilisation selon la revendication 1, dans laquelle le poids moléculaire moyen en nombre du polyéthylène glycol est compris entre 2 000 et 30 000 g/mol.

3. Utilisation selon la revendication 1, dans laquelle le poids moléculaire moyen en nombre du polyéthylène glycol est compris entre 4 000 et 25 000 g/mol.

4. Utilisation selon une ou plusieurs des revendications 1 à 3, dans laquelle le point de fusion du polyéthylène glycol est de 35 à 65 °C.

5. Utilisation selon une ou plusieurs des revendications 1 à 3, dans laquelle le point de fusion du polyéthylène glycol est de 40 à 60 °C.

6. Utilisation selon une ou plusieurs des revendications 1 à 5, dans laquelle du butylhydroxyanisole ou du butylhydroxytoluène est en outre ajouté.

7. Utilisation selon une ou plusieurs des revendications 1 à 6, dans laquelle un ou plusieurs colorants sont en outre contenus en une concentration de 0,01 à 2 % en poids, par rapport au poids du matériau décoratif.

8. Utilisation selon une ou plusieurs des revendications 1 à 7, dans laquelle une ou plusieurs substances odorantes sont en outre contenues en une concentration efficace.

9. Utilisation selon une ou plusieurs des revendications 1 à 8, qui se présente sous la forme de paillettes, qui présentent une taille de particule de 0,1 à 20 mm.

10. Utilisation selon une ou plusieurs des revendications 1 à 8, qui se présente sous la forme d'une poudre ayant une taille de particule de 1 à 1 000 *µ*m.
